(19) Europäisches Patentamt
European Patent Office
Office européen des brevets

(11) **EP 3 406 140 A1**

(12) **EUROPÄISCHE PATENTANMELDUNG**

(43) Veröffentlichungstag:
**28.11.2018 Patentblatt 2018/48**

(51) Int Cl.:
***A01N 25/04*** *(2006.01)*     ***A01G 13/02*** *(2006.01)*

(21) Anmeldenummer: **17172807.4**

(22) Anmeldetag: **24.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder:
• **Bayer CropScience AG**
**40789 Monheim (DE)**

• **Covestro Deutschland AG**
**51373 Leverkusen (DE)**

(72) Erfinder: **Die Erfindernennung liegt noch nicht vor**

(74) Vertreter: **Davepon, Björn**
**Patentanwaltskanzlei Davepon**
**Schloss Dyck**
**41363 Jüchen (DE)**

(54) **WÄSSRIGE ZUSAMMENSETZUNG GEEIGNET ZUM SCHUTZ VON SETZLINGEN ODER BÄUMEN**

(57)    Die Erfindung betrifft wässrige Zusammensetzungen auf Basis von Polychloropren, welche geeignet sind Schichten auf der Außenfläche von Setzlingen oder Bäumen zu bilden und diese dadurch zu schützen und deren Herstellungsverfahren. Ferner betrifft die Erfindung einen Setzling oder Baum auf dessen Außenfläche teilweise oder vollflächig eine Schicht der wässrigen Zusammensetzung gebunden ist. Zwei spezielle Verfahren zum Auftragen einer Schicht auf einen Setzling oder Baum und die Verwendung der wässrigen Zusammensetzung der vorliegenden Erfindung zum Schutz von Setzlingen oder Bäumen.

EP 3 406 140 A1

**Beschreibung**

Die Erfindung betrifft wässrige Zusammensetzungen auf Basis von Polychloropren, welche geeignet sind Schichten auf der Außenfläche von Setzlingen oder Bäumen zu bilden und diese dadurch zu schützen und deren Herstellungsverfahren. Ferner betrifft die Erfindung einen Setzling oder Baum auf dessen Außenfläche teilweise oder vollflächig eine Schicht der wässrigen Zusammensetzung gebunden ist. Zwei spezielle Verfahren zum Auftragen einer Schicht auf einen Setzling oder Baum und die Verwendung der wässrigen Zusammensetzung der vorliegenden Erfindung zum Schutz von Setzlingen oder Bäumen.

Im Forstwesen leiden Setzlinge und neu gepflanzte Bäume oft unter Beschädigungen durch Wildverbiss und Insekten. Ein Beispiel dafür sind Schäden durch den Fichtenrüsselkäfer (*Hylobius abietis*), der hauptsächlich junge Koniferen in den ersten Jahren nach dem Pflanzen schädigt. Diese Käfer schädigen die Rinde indem sie diese zernagen. In schwerwiegenden Fällen, sobald Gefäße und Kambium beschädigt werden, kann dies zum Tod der Pflanze führen. In der Vergangenheit wurden die Setzlinge und Bäume hauptsächlich mittels Pestiziden geschützt. Jedoch haben einige, für die Holzindustrie wesentliche Staaten in jüngster Zeit deren Verwendung verboten oder versuchen diese zu vermeiden. Deshalb besteht ein Bedürfnis nach einer pestizidfreien Lösung für dieses Problem.

Diesbezüglich sind Verfahren bekannt, welche Sand, im makromolekularen Maßstab an den Setzling oder Baum durch die Verwendung von Wachs oder Dispersionen auf Acrylbasis binden.

Zum Beispiel beschreibt Dokument US 2004244287 A1 eine Zusammensetzung zum Schutz von Setzlingen, welche anorganisches Partikelmaterial mit einer mittleren Teilchengröße von 0,1 bis 0,5 mm und ein elastisches Bindemittel mit einer Bruchdehnung von mehr als 100% umfasst, welche sowohl an der Pflanzenrinde als auch an den Partikeln haftet, wobei die Partikel in oder auf dem Bindemittel so vorliegen, dass der Abstand zwischen den Partikeln 2 mm nicht überschreitet. Als konkreteste Beschreibung für das Bindemittel wurden lediglich Dispersionen, unter anderem auf Basis von Polyacrylaten, erwähnt, ohne diese Zusammensetzungen jedoch konkreter zu beschreiben.

Verfahren, welche Sand nachträglich auftragen sind schwierig in ihrer Durchführung, teuer und ein Teil des Setzlings sowie das Equipment zur Auftragung wird durch den hohen Druck bei der Sandstrahlung beschädigt. Enthält die Dispersion Sand im makromolekularen Maßstab, also ca. 0,1 - 0,5 mm, so haben diese groben Partikel keinen rheologischen (verdickenden) Effekt und, ohne an eine Theorie gebunden zu sein, sedimentieren sehr wahrscheinlich, deshalb werden keine sedimentationsstabilen Zusammensetzungen erhalten. Dies führt dazu, dass diese Zusammensetzungen sich weniger gut verarbeiten lassen und auf porösen zu verklebenden Substraten eine geringere Standfestigkeit aufweisen.

Bei Verwendung von Systemen auf Wachsbasis garantiert deren Verwendung keinen langwirkenden Schutz. Darüberhinaus müssen solche Systeme kontinuierlich während der Behandlung erwärmt werden, um diese flüssig für die Anwendung zu halten und, um ein Blockieren des Anwendungsequipments zu vermeiden. Ebenfalls besitzt das erwärmte Wachs ein Beschädigungspotential für die Pflanzen aufgrund eines Temperaturschocks, welchen sie erleiden können. Bei der Pflanzenaufzucht werden die Setzlinge unter 0°C gelagert um Schimmelwachstum in den Lagerräumen zu vermeiden. Wenn Wachs mit einer Temperatur über 40°C auf solche leicht gefrorenen Pflanzen aufgetragen wird, kann eine Zellschädigung nicht vollständig ausgeschlossen werden. Zwei weitere Schwächen einer Wachsschutzschicht sind die Hitzeempfindlichkeit im Sommer, mit der Möglichkeit bei starker Sonneneinstrahlung zu schmelzen und fließen. Ferner das Risiko von Rissen im zweiten Jahr nach der Anwendung aufgrund des Baumwachstums, da die Schicht meist nicht elastisch genug ist.

Eine Aufgabe der vorliegenden Erfindung besteht somit in der Bereitstellung einer Zusammensetzung welche nach deren Auftragung Setzlinge und Bäume wirksam vor Beschädigungen durch Wildverbiss und/oder Insekten schützt und dabei einen langwirkenden Schutz gewährleisten kann ohne beim Auftrag die Setzlinge oder den Baum zu beschädigen. Ferner besteht die Aufgabe solche eine Zusammensetzung bereitzustellen, die zudem kostengünstig in der Herstellung und Aufbringung ist und eine einfache Aufbringung ermöglicht.

Die Aufgabe wurde gelöst durch eine wässrige Zusammensetzung zum Schutz von Setzlingen oder Bäumen, umfassend oder bestehend aus:

  a) eine Polychloropren-Dispersion, bevorzugt mit einer mittleren Teilchengröße von 60 bis 220 nm;
  b) eine wässrige Siliciumdioxid-Dispersion mit einem mittleren Partikeldurchmesser der Siliciumdioxidpartikel von 1 bis 400 nm, bevorzugt 5 bis 100 nm, stärker bevorzugt 8 bis 55 nm;
  c) gegebenenfalls 0,1 bis 30 Gew.-%, bevorzugt 2 bis 10 Gew.-%, bezogen auf das Gesamtgewicht der nichtflüchtigen Anteile der wässrigen Zusammensetzung, mindestens eines Pigments mit einem Brechungsindex von größer 1,5, bevorzugt ein Weißpigment, stärker bevorzugt, Kreide, $TiO_2$, $Al(OH)_3$ oder $Al_2O_3$, am stärksten bevorzugt $TiO_2$;
  d) mindestens ein Verdicker; und
  e) gegebenenfalls weitere Additive.

Von den Erfindern der vorliegenden Erfindung wurde überraschenderweise gefunden, dass eine physikalische Barriere (Schutzschicht), auf Basis von Polychloropren in Kombination mit Sand im Nanomaßstab die vorstehend beschriebenen Nachteile überwinden kann.

Die wässrige Zusammensetzung der vorliegenden Erfindung formt nach Trocknung eine Schutzschicht die Schäden, insbesondere durch *Hylobius abietis,* vorbeugen kann. Die Mischung aus Polychloropren und Sand im Nanomaßstab gewährleistet eine flexible, starke und stabile Schutzschicht, die dehnbar ist, wenn der Baum wächst. Sie kann, abhängig von der Baumart, bis zu zwei Jahre wirksamen Schutz gewährleisten. Die entwickelte Zusammensetzung kann dabei sowohl vor dem Pflanzen auf wurzelnackte Pflanzen, Pflanzen die in Containern gezüchtet wurden, sowie auf bereits eingepflanzte Pflanzen aufgetragen werden, da die Auftragung auch mittels einer Rückenspritze oder Farbspritzpistole erfolgen kann. Ferner kann vergleichbares Equipment wie der Behandlung mit auf Wachs basierten Zusammensetzungen verwendet werden, ohne dass jedoch ein Blockieren des Equipments befürchtet werden muss. Die Schutzschicht, welche mit der wässrigen Zusammensetzung der vorliegenden Erfindung erhalten werden kann ist wärme- und lichttolerant und flexibel genug, um sogar im zweiten Jahr mit dem Baum zu wachsen.

Insbesondere betrifft die Verbindung:

    1. Wässrige Zusammensetzung zum Schutz von Setzlingen oder Bäumen, umfassend oder bestehend aus:

        a) eine Polychloropren-Dispersion, bevorzugt mit einer mittleren Teilchengröße von 60 bis 220 nm;
        b) eine wässrige Siliciumdioxid-Dispersion mit einem mittleren Partikeldurchmesser der Siliciumdioxidpartikel von 1 bis 400 nm, bevorzugt 5 bis 100 nm, stärker bevorzugt 8 bis 55 nm;
        c) gegebenenfalls 0,1 bis 30 Gew.-%, bevorzugt 2 bis 10 Gew.-%, bezogen auf das Gesamtgewicht der nichtflüchtigen Anteile der wässrigen Zusammensetzung, mindestens eines Pigments mit einem Brechungsindex von größer 1,5, bevorzugt ein Weißpigment, stärker bevorzugt, Kreide, $TiO_2$, $Al(OH)_3$ oder $Al_2O_3$, am stärksten bevorzugt $TiO_2$;
        d) mindestens ein Verdicker; und
        e) gegebenenfalls weitere Additive.

    2. Wässrige Zusammensetzung gemäß Gegenstand 1, dadurch gekennzeichnet, dass der mindestens eine Verdicker d) ausgewählt ist aus Polyacrylsäuren, wasserlöslichen Polyurethanen, Cellulosederivaten wie polycarboxylierte Celluloseether, nichtionische Celluloseether und mikrofibrillierte Cellulose, Alginate, Xanthane, Polyvinylalkohole und Mischungen davon, insbesondere Cellulosederivate, stärker bevorzugt mikrofibrillierte Cellulose.

    3. Wässrige Zusammensetzung gemäß einem der vorstehenden Gegenstände, dadurch gekennzeichnet, dass die $SiO_2$-Partikel über Hydroxylgruppen an der Partikel-Oberfläche verfügen.

    4. Wässrige Zusammensetzung gemäß einem der vorstehenden Gegenstände, dadurch gekennzeichnet, dass die wässrige Siliciumdioxid-Dispersion b) eine wässrige Kieselsäuresole ist.

    5. Wässrige Zusammensetzung gemäß einem der vorstehenden Gegenstände, dadurch gekennzeichnet, dass die Polychloropenpolymere in der Polychloropren-Dispersion einen Anteil von 0,1 bis 10 Gew.-% an 2,3-Dichlorbutadien-Comonomeren enthält, bezogen auf das Gesamtgewicht der nichtflüchtigen Anteile der Polychloroprenpolymere.

    6. Wässrige Zusammensetzung gemäß einem der vorstehenden Gegenstände, dadurch gekennzeichnet, dass die Menge an d) 0,01 bis 10 Gew.-%, bevorzugt 0,05 bis 7 Gew.-%, beträgt, bezogen auf das Gesamtgewicht der nichtflüchtigen Anteile der wässrigen Zusammensetzung.

    7. Wässrige Zusammensetzung gemäß einem der vorstehenden Gegenstände, dadurch gekennzeichnet, dass

        20 bis 99 Gew.-%, bevorzugt 40 bis 90 Gew.-% an a);
        0,85 bis 40 Gew.-%, bevorzugt 2,5 bis 20 Gew.-%, stärker bevorzugt 5 bis 9,5 Gew.-% an b);
        0 bis 30 Gew.-%, bevorzugt 0,1 bis 25 Gew.-% stärker bevorzugt 3 bis 10 Gew.-% an c);
        0,01 bis 10 Gew.-%, bevorzugt 0,3 bis 8 Gew.-% an d); und
        0 bis 5 Gew.-%, bevorzugt 0,01 bis 2 Gew.-% an e) enthalten sind, jeweils bezogen auf das Gesamtgewicht der nichtflüchtigen Anteile der wässrigen Zusammensetzung.

    8. Wässrige Zusammensetzung gemäß einem der vorstehenden Gegenstände, dadurch gekennzeichnet, dass sie eine Viskosität von 500 bis 7.000 mPa*s, bevorzugt 2.300 bis 6.300 mPa*s bestimmt nach DIN ISO 2555 mittels eines Brookfield Rotationsviskosimeters mit Spindel #2 bis zu einer Viskosität von 2.500 mPa*s und darüber mit einer Spindel #3, bei 12 upm und 23°C aufweist.

9. Verfahren zur Herstellung der wässrigen Zusammensetzung gemäß einem der Gegenstände 1 bis 8, umfassend die Schritte:

> i) Dispergieren der Komponenten c) und d) und gegebenenfalls e) in der wässrigen Silicium-Dispersion b); und
> ii) Zugeben der Polychloropren-Dispersion a) unter Rühren.

10. Setzling oder Baum, auf dessen Außenfläche teilweise oder vollflächig eine Schicht gebunden ist, die durch Auftragen der wässrigen Zusammensetzung gemäß einem der Gegenstände 1 bis 8 erhalten wurde.

11. Setzling oder Baum gemäß Gegenstand 10, dadurch gekennzeichnet, dass die Schicht eine Schichtdicke von 0,1 bis 3 mm, bevorzugt 0,2 bis 1 mm aufweist, wobei vorzugsweise die Schichtdicke um nicht mehr als 0,1 mm variiert und mindestens 0,1mm beträgt.

12. Setzling oder Baum gemäß Gegenstand 10 oder 11, wobei die Schicht eine Shore A Härte, bestimmt nach DIN ISO 7619-1:2010 von weniger als 50, bevorzugt weniger als 40 aufweist.

13. Verfahren zum Auftragen einer Schicht auf einen Setzling oder Baum, dadurch gekennzeichnet, dass in einem ersten Schritt die wässrige Zusammensetzung gemäß einem der Gegenstände 1 bis 8 auf die Außenfläche des Setzlings oder des Baums teilweise oder vollflächig aufgetragen wird, bevorzugt durch Anstreichen, Rakeln, Tauchen oder Sprühen; und danach in einem zweiten Schritt Trocknen der Zusammensetzung bei einer Temperatur von -5°C bis 80 °C, bevorzugt 20°C bis 40 °C, stärker bevorzugt 20°C bis 28 °C.

14. Verfahren zum Auftragen einer Schicht auf einen Setzling oder Baum, dadurch gekennzeichnet, dass in einem ersten Schritt die Komponenten a), c), d) und gegebenenfalls e) der wässrige Zusammensetzung gemäß einem der Gegenstände 1 bis 8 auf die Außenfläche des Setzlings oder des Baums teilweise oder vollflächig aufgetragen werden; und danach in einem zweiten Schritt die Komponente b) der wässrigen Zusammensetzung gemäß einem der Gegenstände 1 bis 8, welche zusätzlich ein Koagulationshilfsmittel enthält, bevorzugt ein Salz, stärker bevorzugt $CaCl_2$, am stärksten bevorzugt 3 Gew.-% $CaCl_2$, bezogen auf das Gesamtgewicht von b), aufgetragen wird.

15. Verfahren gemäß Gegenstand 13 oder 14, dadurch gekennzeichnet, dass das Auftragen mittels Sprühen, bevorzugt mit einem mobilen Applikationsgerät, insbesondere einer Rückenspritze oder einer Farbspritzpistole; oder mit einer Beschichtungsapparatur in einer Sprühkammer erfolgt.

16. Verwendung der wässrigen Zusammensetzung gemäß einem der Gegenstände 1 bis 8 zum Schutz von Setzlingen oder Bäumen, insbesondere deren Rinde, vor Wildverbiss oder Insekten, insbesondere der Familie der Rüsselkäfer, stärker bevorzugt der Gattung *Hylobius,* am stärksten bevorzugt *Hylobius abietis.*

Polychloropren-Dispersion a)

Erfindungsgemäß geeignete Polychloropren-Dispersionen werden durch Emulsionspolymerisation von Chloropren und eines mit Chloropren copolymerisierbaren ethylenisch ungesättigten Monomeren in alkalischem Medium hergestellt, wie z. B. offenbart in der WO-A 02/24825 (S. 3, Z. 26-S. 7, Z. 4), DE-A 30 02 734 (S. 8, Z. 23- S. 12, Z. 9), US-A 5,773, 544 (Sp. 2, Z. 9 bis Sp. 4, Z. 45) oder WO-A 2009027013. Besonders bevorzugt sind Polychloropren Dispersionen, die durch kontinuierliche Polymerisation hergestellt werden, wie z. B beschrieben in der WO-A 02/24825, Beispiel 2 und DE 3 002 734 Beispiel 6, wobei der Reglergehalt zwischen 0,01 % und 0,3 % variiert werden kann.

Wässrige Siliciumdioxid-Dispersion b)

Wässrige Dispersionen von Siliciumdioxid sind seit langem bekannt. Je nach Herstellprozess liegen sie in unterschiedlicher Struktur vor. Erfindungsgemäß geeignete Siliciumdioxid-Dispersionen können auf Basis von Kieselsol, Kieselgel, pyrogene Kieselsäuren oder Fällungskieselsäuren oder Mischungen der genannten, erhalten werden. Es werden solche wässrigen Siliciumdioxid-Dispersionen eingesetzt, deren $SiO_2$-Partikel einen mittleren Partikeldurchmesser von 1 bis 400 nm, bevorzugt 5 bis 100 nm und besonders bevorzugt 8 bis 55 nm aufweisen. Für den Fall das gefällte Kieselsäuren eingesetzt werden, werden diese zwecks Teilchenverkleinerung gemahlen. Der mittlere Partikeldurchmesser wird bestimmt durch Laserbeugung auf einem Laserdiffraktometer. Zunächst wird eine Probe der Kieselsäuredispersion oder der wässrigen Zusammensetzung unter Rühren entnommen, in ein Becherglas überführt und durch Zugabe von Wasser ohne Zusatz von Dispergieradditiven so verdünnt, dass eine Dispersion mit einem Gewichtsanteil von ca. 1 Gew.-% $SiO_2$ entsteht. Zur Bestimmung der Partikelgröße von Pulvern wird eine Dispersion mit einem Gewichtsanteil von ca. 1 Gew.-% $SiO_2$ durch Einrühren des Pulvers in Wasser hergestellt. Unmittelbar im Anschluss an die Dispergierung wird von einer Teilprobe der Dispersion mit dem Laserdiffraktometer die Partikelgrößenverteilung bestimmt. Für die Messung ist ein relativer Brechungsindex von 1,09 zu wählen. Alle Messungen erfolgen bei Raumtemperatur.

Kieselsäuresole sind kolloidale Lösungen von amorphem Siliciumdioxid in Wasser, die auch als Siliciumdioxidsole meist aber kurz als Kieselsole bezeichnet werden. Das Siliciumdioxid liegt dabei in Form von kugelförmigen und an der Oberfläche hydroxilierten Partikeln vor.

Der Partikeldurchmesser der Kolloidteilchen beträgt in der Regel 1 bis 200 nm, wobei die zur Teilchengröße korrelierende spezifische BET-Oberfläche (bestimmt nach der Methode von G. N. Sears, Analytical Chemistry Vol. 28, N. 12, 1981-1983, Dezember 1956, wie nachstehend beschrieben) bei 15 bis 2000 $m^2/g$ liegt. Die Oberfläche der $SiO_2$-Teilchen weist eine Ladung auf, die durch ein entsprechendes Gegenion ausgeglichen wird, das zur Stabilisierung der kolloidalen Lösung führt. Die alkalisch stabilisierten Kieselsole besitzen einen pH-Wert von 7 bis 11,5 und enthalten als Alkalisierungsmittel beispielsweise geringe Mengen $Na_2O$, $K_2O$, $Li_2O$, Ammoniak, organische Stickstoffbasen, Tetraalkylammoniumhydroxide oder Alkali-oder Ammoniumaluminate. Kieselsole können auch als semistabile kolloidale Lösungen schwach sauer vorliegen. Ferner ist es möglich, durch Beschichtung der Oberfläche mit $Al_2(OH)5Cl$ kationisch eingestellte Kieselsole herzustellen. Die Feststoff-Konzentrationen der Kieselsole liegen bei 5 bis 60 Gew.-% $SiO_2$.

Der Herstellprozess für Kieselsole durchläuft im Wesentlichen die Produktionsschritte: Entalkalisierung von Wasserglas mittels Ionenaustausch, Einstellung und Stabilisierung der jeweils gewünschten Teilchengrößen(verteilung) der $SiO_2$-Partikel, Einstellung der jeweils gewünschten $SiO_2$-Konzentration und gegebenenfalls einer Oberflächenmodifikation der $SiO_2$-Partikel, wie beispielsweise mit $Al_2(OH)5Cl$. In keinem dieser Schritte verlassen die $SiO_2$-Partikel den kolloidal gelösten Zustand. Dadurch erklärt sich das Vorliegen der diskreten Primärpartikel mit beispielsweise hoher Bindereffektivität.

Unter Kieselgele versteht man kolloidal geformte oder ungeformte Kieselsäure von elastischer bis fester Konsistenz mit lockerer bis dichter Porenstruktur. Die Kieselsäure liegt in Form von hochkondensierter Polykieselsäure vor. Auf der Oberfläche befinden sich Siloxan und/oder Silanol-Gruppen. Die Herstellung der Kieselgele erfolgt aus Wasserglas durch Umsetzung mit Mineralsäuren. Die Primärpartikelgröße beträgt im Allgemeinen 3 bis 20 nm und die spezifische Oberfläche 250 bis 1000 $m^2/g$.

Die spezifische Oberfläche wird in der vorliegenden Erfindung dabei (nach der Methode von G. N. Sears, Analytical Chemistry Vol. 28, N. 12, 1981-1983, Dezember 1956) wie folgt bestimmt: Die Titrationsmethode ermittelt den Verbrauch an Natronlauge zwischen pH = 4 und pH = 9. Der Verbrauch wird mittels einer Eichgeraden auf die als BET-Wert ermittelte spezifische Oberfläche umgerechnet. Eine Prüfmittelmenge einwiegen, die exakt 5 g Glührückstand entspricht, in dem die einzuwiegende Menge nach der Gleichung: "500 / % Glührückstand" berechnet wird (Gew. A), und diese Menge mit einer Genauigkeit von mindestens 0,1 g in ein Becherglas eingewogen wird (Gew. B). Auf ca. 80 - 100 ml mit deionisiertem Wasser verdünnen. Mit einer geeigneten Menge Schwefelsäure versetzen, so dass ein pH-Wert < 3 erreicht wird. Vollständig in einen 500 ml-Messkolben überführen. 100 g NaCl in den Messkolben eintragen, Wasser nachsetzen, das NaCl lösen und mit deionisiertem Wasser bis zur Marke auffüllen. Dann Titration wie folgt: 150 ml der vorbereiteten Prüfmittellösung in das 400 ml-Doppelmantelgefäß pipettieren und auf 25°C ± 0,1°C thermostatisieren. Glaselektrode eintauchen und unter Rühren gleichmäßig Natronlauge mit einer Geschwindigkeit von höchstens 1 ml/min zutropfen lassen. Ermittlung des Verbrauchs an Natronlauge zwischen pH = 4 und einem End-pH von ca. 9. Verwendung der folgenden Gleichung zur Berechnung der spezifischen Oberfläche:

$$m^2/g \text{ spezifische Oberfläche} = 32 \; * \; \text{Verbrauch Natronlauge [ml]} \; - \; 25$$

Des Weiteren wird zwischen pyrogener Kieselsäure und Fällungskieselsäure unterschieden. Beim Fällungsverfahren wird Wasser vorgelegt und anschließend Wasserglas und Säure, wie $H_2SO_4$, simultan zugegeben. Dabei entstehen kolloidale Primärteilchen, die mit fortschreitender Reaktion agglomerieren und zu Agglomeraten verwachsen. Die spezifische Oberfläche liegt bei 30 bis 800 $m^2/g$ und die Primärpartikelgröße bei 5 bis 100 nm. Die Primärpartikel von diesen als Feststoff vorliegenden Kieselsäuren sind zu Sekundäragglomeraten fest vernetzt.

Pyrogene Kieselsäure kann durch Flammenhydrolyse oder mit Hilfe des Lichtbogenverfahrens hergestellt werden. Das dominierende Syntheseverfahren für pyrogene Kieselsäuren ist die Flammenhydrolyse, bei der Tetrachlorsilan in einer Knallgasflamme zersetzt wird. Die dabei gebildete Kieselsäure ist röntgenamorph. Pyrogene Kieselsäuren besitzen an ihrer nahezu porenfreien Oberfläche deutlich weniger OH- Gruppen als Fällungskieselsäure. Die über Flammhydrolyse hergestellte pyrogenen Kieselsäure hat eine spezifischen Oberfläche von 50 bis 600 m$^2$/g und eine Primärpartikelgröße von 5 bis 50 nm, die über das Lichtbogenverfahren hergestellte Kieselsäure hat eine spezifischen Oberfläche von 25 bis 300 m$^2$/g und eine Primärpartikelgröße von 5 bis 500 nm.

Weitere Angaben zu Synthese und Eigenschaften von Kieselsäuren in fester Form sind beispielsweise K. H. Büchel, H. -H. Moretto, P. Woditsch "Industrielle Anorganische Chemie", Wiley VCH Verlag 1999, Kap. 5.8 zu entnehmen.

Werden für die erfindungsgemäße Polymer-Dispersion ein als isolierter Feststoff vorliegender SiO$_2$-Rohstoff, wie beispielsweise pyrogene oder gefällte Kieselsäure, eingesetzt, so wird dieser in eine wässrige SiO$_2$-Dispersion durch Dispergieren überführt. Zur Herstellung der Siliciumdioxid-Dispersionen werden Dispergatoren des Standes der Technik eingesetzt, bevorzugt solche, die zur Erzeugung hoher Scherraten geeignet sind, wie z. B. Ultratorrax oder Dissolverscheiben.

Bevorzugte erfindungsgemäße Polymer-Dispersionen sind solche, in denen die SiO$_2$-Partikel der Siliciumdioxid-Dispersion b) als diskrete unvernetzte Primärpartikel vorliegen. Es ist ebenfalls bevorzugt, dass die SiO$_2$-Partikel über Hydroxylgruppen an der Partikel-Oberfläche verfügen. Besonders bevorzugt werden als wässrige Siliciumdioxid-Dispersionen b) wässrige Kieselsäuresole eingesetzt.

Eine wesentliche Eigenschaft der erfindungsgemäßen Kieselsäuren ist ihre verdickende Wirkung in Formulierungen aus Polychloropren-Dispersionen, die dazu führt, dass die so hergestellten Klebstoffe feinteilige, sedimentationsstabile Dispersionen bilden, sich gut verarbeiten lassen und auch auf porösen zu verklebenden Substraten eine hohe Standfestigkeit haben.

Wässrige Zusammensetzungen, welche eine Polychloropren-Dispersion a) gemäß der vorliegenden Erfindung und eine Siliciumdioxid-Dispersion b) gemäß der vorliegenden Erfindung enthalten sind Gemische von kommerziell erhältlichen Dispersionen. Geeignete Polychloropren-Dispersionen a) gemäß der vorliegenden Erfindung sind kommerziell unter dem Handelsnamen Dispercoll C, insbesondere Dispercoll C 74, C 84, C 2325, und C2372 von der Covestro Deutschland AG erhältlich. Geeignete Siliciumdioxid-Dispersionen b) gemäß der vorliegenden Erfindung sind kommerziell unter dem Handelsnamen Dispercoll S, insbesondere Dispercoll S 5005 (55 nm), S 4510 (30 nm), S4020 (15 nm), S3030 (9 nm), S 2020XP (15 nm) besonders bevorzugt Dispercoll S 4510, von der Covestro Deutschland AG erhältlich. Vorstehend in den Klammern ist der mittlere Partikeldurchmesser angegeben. Erfindungsgemäß besonders bevorzugt ist ein Gemisch der vorstehend genannten Dispercoll Typen, wobei Dispercoll S 4510 umfasst ist.

Besonders bevorzugt sind die unterschiedlichen Dispercoll Typen in folgenden Anteilen in der wässrigen Zusammensetzung enthalten:

Dispercoll C74 5 bis 99 Gew.-%, bevorzugt 10 bis 70 Gew.-%.
Dispercoll C2372 0 bis 80 Gew.-%, bevorzugt 5 bis 40 Gew.-%, stärker bevorzugt 15 bis 25 Gew.-%.
Andere Dispercoll C-Typen (Dispercoll C2325 oder Dispercoll C 84) in Summe 0 bis 20 Gew.-%, bevorzugt 0 bis 10 Gew.-%.
Dispercoll S4510 in 1 bis 30 Gew.-%, bevorzugt 5 bis 20 Gew.%.

Der Anteil der jeweiligen Komponenten bezieht sich auf das Gesamtgewicht der nichtflüchtigen Anteile der wässrigen Zusammensetzung, dabei ergibt die Summe der Komponenten der wässrigen Zusammensetzung a) bis e) 100 Gew.-%.

Pigmente mit einem Brechungsindex von größer 1,5 c)

Die wässrige Zusammensetzung der vorliegenden Erfindung enthält vorzugsweise 0,1 bis 30 Gew.-%, bevorzugt 1,5 bis 15 Gew.-%, stärker bevorzugt 2,5 bis 10 Gew.-%, am stärksten bevorzugt 3 bis 9,5 Gew.-% mindestens eines Pigments mit einem Brechungsindex von größer 1,5 bevorzugt größer 2,0 stärker bevorzugt größer 2,5. Der Brechungsindex kann mit einem Abbe-Refraktometer bei 20°C bestimmt werden.

In bevorzugten Ausführungsformen ist das mindestens eine Pigment ausgewählt aus Weißpigmenten, stärker bevorzugt aus Kreide, TiO$_2$, ZnO, MgO, Al(OH)$_3$ Al$_2$O$_3$ oder Mischungen davon; am stärksten bevorzugt umfasst oder ist das mindestens eine Pigment TiO$_2$.

Zinkoxid oder Magnesiumoxid, können als Akzeptor für geringe Mengen von Chlorwasserstoff, der von den Chloroprenpolymerisaten abgespalten werden kann, verwendet werden und sind deshalb in bevorzugten Ausführungsformen zusätzlich enthalten. Diese werden in Mengen von 0,1 bis 10 Gew.-%, bevorzugt von 1 bis 5 Gew.-%, bezogen auf die nichtflüchtigen Anteile der wässrigen Zusammensetzung, zugesetzt und können in Gegenwart der Polychloropren-Dispersionen (a) partiell hydrolisieren oder enthalten hydrolisierbare Anteile. Auf diese Weise kann die Viskosität der Polymer-Dispersion angehoben und auf ein gewünschtes Niveau eingestellt werden.

Beschrieben wird diese Hydrolisierung für ZnO z. B. in "Gmelins Handbuch der anorganischen Chemie", 8. Auflage, 1924, Verlag Chemie Leipzig, Bd. 32, S. 134/135 und im Ergänzungsband 32, Verlag Chemie, 1956, S 1001-1003. Für MgO z. B. in "Gmelins Handbuch der anorganischen Chemie", 8. Auflage, 1939, Verlag Chemie Berlin, Bd. 27, S. 12/13,47-50, 62-64.

Es können aber auch andere Stabilisatoren, wie z. B. Bleiglätte, oder Additive, die in Gegenwart alkalischer Polychloropren Dispersionen hydrolisieren, zugesetzt werden.

Wird eine höhere Viskosität der erfindungsgemäßen wässrigen Zusammensetzung nicht gewünscht, so können ZnO-oder MgO-Zusätze entfallen, ohne dass die Lagerstabilität des Produktes negativ beeinflusst wird.

Verdicker d)

Die wässrige Zusammensetzung der vorliegenden Erfindung enthält mindestens einen Verdicker. Geeignete Verdicker sind zum Beispiel beschrieben in W. Heilen et al. "Additive für wässrige Lacksysteme, Vincentz-Verlag Hannover, ISBN 978-3-86630-845-9, Seite 61 ff. Geeignete Verdicker sind beispielsweise in Mengen von 0,01 bis 10 Gew. -%, bezogen auf die nichtflüchtige Anteile der wässrigen Zusammensetzung enthalten, bevorzugt sind organische Verdickungsmittel, wie Cellulosederivate, insbesondere mikrofibrillierte Cellulose, Alginate, Stärke, Stärkederivate, Polyurethan-Verdickungsmittel oder Polyacrylsäure. In einer weiteren Ausführungsform in Mengen von 0,05 bis 5,5 Gew. -%, bezogen auf nichtflüchtige Anteile der wässrigen Zusammensetzung enthalten, bevorzugt Cellulosederivate, wie beispielsweise mikrofibrillierte Cellulose. Geeignete Mikrofibrillierte Cellulose kann zum Beispiel erhalten werden wie in EP 0120471 A2, WO 2015/180844 A1, EP 2196579 A1 oder WO 2011/095335 A1 offenbart.

Der mindestens eine Verdicker ist bevorzugt ausgewählt aus der Gruppe bestehend aus Polyacrylsäuren, wasserlöslichen Polyurethanen, Kieselsäuren, Cellulosederivaten wie polycarboxylierte Celluloseethern, nichtionische Celluloseethern und mikrofibrillierten Cellulosen, Alginaten, Xanthanen, Polyvinylalkoholen und Mischungen davon, insbesondere Cellulosederivate, stärker bevorzugt mikrofibrillierte Cellulose. Geeignete Mittel sind kommerziell erhältlich unter den Handelsnamen Exilva der Firma Borregaard.

Additive e)

Die wässrige Zusammensetzung der vorliegenden Erfindung kann gegebenenfalls Additive enthalten.

Beispielsweise können Netzmittel, insbesondere Polyphosphaten, wie Natriumhexametaphosphat, Naphthalinsulfonsäure, Ammonium-oder Natriumpolyacryl-Säuresalze zugesetzt werden. Ebenfalls geeignet sind Salze von Polyacrylsäuren, insbesonders Na-Salze von Polyacrylsäuren, wie beispielsweise kommerziell erhältlich unter dem Handelsnamen Dispex N40 von BASF. Bevorzugt in einer Menge von von 0,2 bis 0,6 Gew. -%, alle Angaben bezogen auf nichtflüchtige Anteile der wässrigen Zusammensetzung, zugesetzt werden.

In weiteren, jedoch nicht bevorzugten Ausführungsformen können zur Konservierung auch Fungizide zugesetzt werden. Diese kommen in Mengen von 0,02 bis 1 Gew. -%, bezogen auf nichtflüchtige Anteile, der wässrigen Zusammensetzung zum Einsatz. Geeignete Fungizide sind beispielsweise Phenol-und Kresolderivate oder zinnorganische Verbindungen.

Gegebenenfalls können auch klebrigmachende Harze, wie z. B. unmodifizierte oder modifizierte Naturharze wie Kollophoniumester, Kohlenwasserstoffharze oder synthetische Harze wie Phthalatharze der erfindungsgemäßen Polymer-Dispersion in dispergierter Form zugesetzt werden (siehe z. B. in "Klebharze" R. Jordan, R. Hinterwaldner, S. 75-115, Hinterwaldner Verlag München 1994). Bevorzugt sind Alkylphenolharz-und Terpenphenolharz-Dispersionen mit Erweichungspunkten grösser 70 °C, besonders bevorzugt grösser 110°C.

Ebenfalls möglich ist ein Einsatz organischer Lösungsmittel, wie beispielsweise Toluol, Xylol, Butylacetat, Methylethylketon, Ethylacetat, Dioxan oder deren Gemische oder Weichmacher, wie beispielsweise solche auf Adipat-, Phthalat-oder Phosphatbasis in Mengen von 0,5 bis 10 Gew.-Teile, bezogen auf nichtflüchtige Anteile der wässrigen Zusammensetzung.

In bevorzugten Ausführungsformen ist das mindestens eine Additiv ausgewählt aus Dispergierhilfsmitteln, Netzmitteln, Haftvermittlern und Entschäumern. In einer weiteren bevorzugten Ausführungsform ist das mindestens eine Additiv ein Dispergierhilfsmittel, und in Konzentrationen von 0,01 bis 2 Gew.-%, stärker bevorzugt 0,01 bis 0,5 Gew.-%, bezogen auf nichtflüchtige Anteile der wässrigen Zusammensetzung enthalten.

Wässrige Zusammensetzung

Zur Herstellung der erfindungsgemäßen wässrigen Zusammensetzung werden die Mengenverhältnisse der einzelnen Komponenten so gewählt, dass die resultierende Dispersion einen Gehalt an dispergierten Polymeren von 30 bis 60 Gew.-% aufweisen, wobei die Anteile der Polychloropren-Dispersion (a) von 20 bis 99 Gew.-% und der Siliciumdioxid-Dispersion (b) von 0,85 bis 40 Gew. -% betragen, wobei sich die Prozentangaben auf das Gewicht nichtflüchtiger Anteile der Komponenten a) bis e) beziehen und zu 100 Gew.-% addieren. Bevorzugt enthalten die erfindungsgemäßen Polymer-Dispersionen einen Anteil von 70 Gew. -% bis 98 Gew. -% einer Polychloropren-Dispersion (a) und einen Anteil von 2 Gew. -% bis 30 Gew. -% einer wässrige Siliciumdioxid-Dispersion, insbesondere einer Kieselsol-Dispersion (b), besonders bevorzugt sind die Mischungen aus 80 Gew. -% bis 93 Gew. -% an Dispersion (a) und 20 Gew. -% bis 7 Gew. -% an Dispersion (b), wobei sich die Prozentangaben auf das Gewicht nichtflüchtiger Anteile von a) bis e) beziehen und zu 100 Gew. -% addieren.

Den Polychloropren Dispersionen können gegebenenfalls auch andere Dispersionen wie z. B. Polyacrylat-, Polyvinylidenchlorid-, Polybutadien-, Polyvinylacetat-oder Styrol-Butadien-Dispersionen in einem Anteil von bis zu 30 Gew.-% enthalten.

Herstellung der wässrigen Zusammensetzung

Die Herstellung der erfindungsgemäßen wässrigen Zusammensetzung ist dadurch gekennzeichnet, dass die Polychloropren-Dispersion (a) mit der Siliciumdioxid-Dispersion (b) und dem Verdicker (d) gemischt und gegebenenfalls die üblichen Klebstoffhilfs- und Zusatzmitteln, (c) und/oder (e) zugegeben werden.

Ein bevorzugtes Verfahren zur Herstellung der erfindungsgemäßen wässrigen Zusammensetzung ist dadurch gekennzeichnet, dass zunächst die Polychloropren-Dispersion (a) mit der Komponente (d) und gegebenenfalls (c) und/oder (e) vermischt wird und die Kieselsole (b) während oder nach der Vermischung zugegeben werden.

Eine weiteres bevorzugtes Verfahren zur Herstellung der erfindungsgemäßen wässrigen Zusammensetzungen umfass die Schritte:

i) Dispergieren der Komponente d) und gegebenenfalls c) und/oder e) in der wässrigen Silicium-Dispersion b); und

ii) Zugeben der Polychloropren-Dispersion a) unter Rühren. Vorzugsweise findet der Dispergierschritt i) unter Scherkräften von 20-25 m/s statt.

Die erfindungsgemäßen wässrigen Zusammensetzungen werden zum Schutz von Setzlingen oder Bäumen, insbesondere deren Rinde, vor Wildverbiss oder Insekten, insbesondere der Familie der Rüsselkäfer, bevorzugt der Gattung *Hylobius,* am stärksten bevorzugt *Hylobius abietis* verwendet.

Als Setzling gemäß der vorliegenden Erfindung wird eine Jungpflanze verstanden, welche in einem besonderen Beet oder in einem Gefäß gezüchtet wird. Unter Bäumen werden gemäß der vorliegenden Erfindung verholzende Samenpflanzen verstanden, die eine dominierende Sprossachse aufweisen und welche durch sekundäres Dickenwachstum an Umfang zunimmt. Sowohl Bedecktsamer als auch Nacktsamer sind in der Definition eingeschlossen. Insbesondere richtet sich die vorliegende Erfindung auf den Schutz von Koniferen, insbesondere Tannen und Kiefern.

Auftragen der wässrigen Zusammensetzung auf den Setzling oder den Baum

Der Auftrag der wässrigen Zusammensetzung kann auf bekannte Weisen, z. B. durch Streichen, Gießen, Rakeln, Spritzen, Walzen oder Tauchen durchgeführt werden. Das Auftragen kann dabei bei Temperaturen von -5°C bis zu 80°C, bevorzugt bei 5 °C bis 45°C, stärker bevorzugt 10°C bis 35°C, am stärksten bevorzugt 20 bis 30°C erfolgen. Die Trocknung des Klebstofffilms, sowohl aktiv als auch passiv, kann bei Temperaturen von -5°C bis zu 80°C erfolgen, bevorzugt bei 5°C bis 45°C, stärker bevorzugt 10°C bis 35°C, am stärksten bevorzugt 20 bis 30°C. In einer bevorzugten Ausführungsform findet das Auftragen durch sprühen oder Tauchen statt.

Wird die Auftragung durch Tauchen durchgeführt, so wird bevorzugt durch Säuren, Salzlösung oder Gefriertrocknung das Koagulieren beschleunigt. Als bevorzugtes Koagulationshilfsmittel wird eine Salzlösung eingesetzt, insbesondere eine wässrige $CaCl_2$ Lösung, stärker bevorzugt eine 3%ige $CaCl_2$ Lösung. Dies verhindert, dass die wässrige Zusammensetzung aufgrund der Gravitation von oben nach unten verläuft und somit zu unterschiedlichen Schichtdicken führt. Zudem kann eine Verunreinigung und Materialverlust durch das Tropfen der wässrigen Zusammensetzung verhindert werden. Wird die Koagulation mittels einer der vorstehend genannten Möglichkeiten beschleunigt, so ist bevorzugt ein Trocknungsschritt nötig und danach ein anschließender Kühlschritt, damit die erhaltene Schicht ihre Klebrigkeit verliert. Eine hohe Klebrigkeit der Schicht ist nicht vorteilhaft, da es so, z.B. bei der Lagerung und beim Transport der behandelten Setzlinge und Bäume zu Verklebungen und, falls sogar ein Trennen dieser nötig ist, zu Schäden an der aufgetragenen Schicht führen könnte.

In einer besonders bevorzugten Ausführungsform wird zuerst eine wässrige Zusammensetzung, welche die Komponenten a) und d) und gegebenenfalls c) und/oder e) umfasst oder die daraus besteht auf den Setzling oder Baum aufgetragen, danach wird in einem zweiten Schritt die Siliciumdioxid-Dispersion b), welche zusätzlich ein Koagulationshilfsmittel enthält, bevorzugt ein Salz, stärker bevorzugt $CaCl_2$, am stärksten bevorzugt 3 Gew.-% $CaCl_2$, bezogen auf das Gesamtgewicht von b), aufgetragen. Es wurde überraschend gefunden, dass beim Einsatz einer wässrigen Siliciumdioxid-Dispersion welche ein Koagulationshilfsmittel, insbesondere $CaCl_2$, enthält, die vorstehend beschriebenen Trocknungs- und Kühlschritte nicht nötig sind.

Ferner kann der Auftrag durch eine Maschine erfolgen, durch welche das Auftragen der Beschichtung auf viele Setzlinge, sowohl mit nackten Wurzeln oder auch mit Wurzelballen, gleichzeitig erfolgen kann. Die Maschine besteht aus einem Kettenband mit einer Gesamtlänge von 30 m, welche kontinuierlich mit mehreren Setzlingen, z.B. 250, gleichzeitig arbeiten kann. Die Setzlinge bewegen sich, in Halteschellen platziert, entlang der Strecke.

Hierbei kann die wässrige Zusammensetzung bei horizontal befestigten Setzlingen von oben aufgegossen oder von unten angespült werden. Ein Aufspritzen der wässrigen Zusammensetzung ist ebenfalls möglich je nach Aufbau der Anlage kann ein geringer Druck von weniger als einem Bar bis zu mehreren Bar Druck, bevorzugt weniger als 5 Bar verwendet werden. Die Sprühvariante kann für horizontal als auch vertikal befestigte Setzlinge verwendet werden, da das Material in der richtigen Schichtdicke nicht herunterläuft. Vertikal befestigte Setzlinge, insbesondere Pflanzen in Pflanzcontainern oder Multitopfplatten, können auch von oben stammnah begossen, betropft oder besprüht werden. Hierbei ist zu beachten, dass man der Pflanze noch genügend unbehandelte Fläche lässt, um Gasaustauch und Wachstum sicher stellen zu können. In einer bevorzugten Ausführungsform wird deshalb lediglich der Hauptstamm der Pflanze besprüht.

In einer weiteren bevorzugten Ausführungsform der vorstehend genannten Maschine erfolgt das Auftragen der wässrigen Zusammensetzung der vorliegenden Erfindung, oder einer wässrige Zusammensetzung, welche die Komponenten a) und d) und gegebenenfalls c) und/oder e) umfasst oder die daraus besteht, in zwei festen Stationen, zuerst von unten und gleich danach von oben. Die Setzlinge werden danach in eine Sprühkammer transportiert, wo die beschichteten Teile simultan mit einem Gemisch eines Koagulationshilfsmittels oder einer wässrigen Siliciumdioxid-Dispersion b), welche zusätzlich ein Koagulationshilfsmittel enthält, bevorzugt ein Salz, stärker bevorzugt $CaCl_2$, am stärksten bevorzugt 3 Gew.-% $CaCl_2$, bezogen auf b), besprüht werden um den Koagulationsprozess zu unterstützen. Nach ca. 4 m werden die Setzlinge weitertransportiert in den Kühlbereich, insbesondere bei -4 bis -5°C, um den Trockenprozess abzuschließen. Das System enthält zwei Tanks, einen für die wässrige Zusammensetzung oder Komponenten a) und d) und gegebenenfalls c) und/oder e) und einen für das Koagulationshilfsmittel oder Komponenten b) mit dem Koagulationshilfsmittel. Jeder Tank ist dabei in zwei separate Bereiche unterteilt, um Sedimentation von ungewünschten Rückständen, zum Beispiel Dreck, zu ermöglichen. Die jeweiligen Pumpsysteme sind mit einfach auszutauschenden Filtern ausgestattet. Die Kapazität beträgt bis zu einem Setzling pro Sekunde. Nach dem Trocken in dem Kühlbereich können die Pflanzen entweder manuell aus den Halteschellen genommen werden oder automatisch weitergeleitet werden um weiter verpackt oder gelagert zu werden.

In bevorzugten Ausführungsformen erfolgt das Auftragen mittels mobilen Applikationsgeräten, darunter sind Geräte zu verstehen, welche von einer Person transportiert werden können und welche das Aufbringen auf Setzlinge oder Bäume ermöglicht, welche bereits in der Landschaft verpflanzt sind. Bevorzugte mobile Applikationsgeräte sind Rückenspritzen, auch Knapsack-Sprayer genannt, und Farbspritzpistolen. Bei der Auftragung mit mobilen Applikationsgeräten findet die Auftragung und der Trocknungsschritt bevorzugt bei Temperaturen zwischen 0°C und 45 °C, stärker bevorzugt 5°C und 35 °C, am stärksten bevorzugt zwischen 10 bis 30 °C statt.

Eine weitere Auftragungsmaschine kann eine klassische Farbspritzpistole sein, bevorzugt mit hohem Durchfluss. Beispielsweise kommerziell erhältlich von der Firma Wagner. Bevorzugt ist diese mit einem Recyclingsystem ausgestattet, um die wässrige Zusammensetzung aufzufangen, welches an den Setzlingen bei der Behandlung vorbeigeht. Ebenfalls geeignet sind Tunnelspritzen, die im Weinbau eingesetzt werden. Diese Traktorspritzen oder Rückenspritzen können bevorzugt ebenfalls mit einem Recyclingsystem ausgestattet werden. Die Option des Spritzens einer wasserbasierten Zusammensetzung ermöglicht das mobile Spritzen nach Pflanzung der Setzlinge. Dies wäre insbesondere in Regionen mit niedrigem Hylobius-Befallsdruck interessant. Dort könnte der Forstbetrieb nur nach Bedarf behandeln.

Ebenfalls bevorzugt wäre eine zangenartige Spritze, die kontinuierlich das nicht am Stamm haftende Material auffängt und wieder zu den Düsen leitet. Da man ca. 10 Gram Material pro Pflanzen benötigt, kann man mit einem 10-15 Litertank, ähnlich einer klassischen Rückenspritze, etwa 1000 Pflanzen behandeln. Je nach Pflanzdichte entspricht diese Menge bis zu einem Hektar bereits gepflanzter Setzlinge. Als Antrieb solch einer Spritze können Druckluft im Spritztank oder eine batteriebetrieben Pumpe funktionieren. Die Öffnung der Spritzdüsen müsste mit einem Drucksensor/-hebel direkt an der Spritzzange (reagiert auf den Zangenschluss) oder an einer durch die Hand erreichbare Stelle (Halterung an der Spritzlanze) erfolgen.

In einer besonders bevorzugten Ausführungsform weißt die erhaltene Schicht einen Shore A Härte, bestimmt nach DIN ISO 7619-1:2010 von weniger als 50 auf. Je geringer die Shore A Härte, desto schwieriger wird es für den Käfer die Schicht mit seinen Schneidewerkzeugen abzuschaben.

Beispiele

Als Polychloropren-Dispersionen a) wurden Dispercoll C74, Dispercoll C2325 und Dispercoll C2372 verwendet, alle kommerziell erhältlich von der Coverstro Deutschland AG. Als wässrige Siliciumdioxid-Dispersion b) wurde Dispercoll S4510 verwendet, ebenfalls erhältlich von der Covestro Deutschland AG. Die Siliciumdioxidpartikel weisen einen mittleren Partikeldurchmesser von 30 nm auf.

Das Titandioxid (c) wurde von der Firma Kronos erworben.

Als Verdicker d) wurde Exilva, eine mikrofibrillierte Cellulose verwendet, kommerziell erhältlich von Borregaard.

Alle Angaben in [%] oder % sind Gew.-%, dies sich auf das Gesamtgewicht der nichtflüchtigen Anteile der wässrigen Zusammensetzung beziehen, soweit nicht anders angegeben.

Folgende vier erfindungsgemäße Basiszusammensetzungen wurden hergestellt

Tabelle 1:

| Zusammensetzung | Dispercoll C74 [%] | Dispercoll C2325 [%] | Dispercoll C2372 [%] | Dispercoll S4510 [%] | Verdicker [%] | Titandioxid [%] |
|---|---|---|---|---|---|---|
| 1 | 79,45 | 0,00 | 0,00 | 20,48 | 0,07 | 0,00 |
| 2 | 0,00 | 79,45 | 0,00 | 20,48 | 0,07 | 0,00 |
| 3 | 55,44 | 0,00 | 18,48 | 16,31 | 5,13 | 4,65 |
| 4 | 0,00 | 0,00 | 75,75 | 19,53 | 0,07 | 4,65 |

Beispiele 1-10

Wässrige Zusammensetzungen die eine weiße Schicht auf dem Setzling oder Baum bildet

Bevorzugte Ausführungsformen der wässrigen Zusammensetzung der vorliegenden Erfindung sind in der Lage nach dem Auftragen eine weiße Schicht zu bilden.

Als Basisformulierung wurde die Zusammensetzung 2 gewählt. Da diese farblos ist, wurden durch die Zugabe von Pigmenten bzw. die Erhöhung des Anteils der wässrigen Siliciumdioxid-Dispersion (Dispercoll S4510) (wie in Tabelle 2 aufgeführt) versucht eine Zusammensetzung zu erhalten welche geeignet ist eine weiße Schicht zu bilden. Die wässrigen Zusammensetzungen wurden mit einem Pinsel oder einer Farbsprühpistole auf Setzlinge mit einem Durchmesser des Hauptstamms von ca. 0,5 bis 1,3 cm so aufgetragen, dass sich eine 0,4 bis 0,7 mm dicke Schicht bildete.

Die Farbe, die Oberflächenklebrigkeit, die Flexibilität und das Risiko für Rissbildung wurden visuell beurteilt, im Vergleich zu der Zusammensetzung 2 (Beispiel 1).

Für die Ermittlung der Oberflächenklebrigkeit wurden die beschichtete Oberfläche von zwei Setzlingen aneinandergelegt und dann wurde versucht beide zu trennen. Die Kraft, die dafür benötigt wurde, wurde in nicht klebrig, leicht klebrig und klebrig unterteilt.

Für den Test der Flexibilität wurde die Schicht auf dem Setzling mit dem Finger gerieben und der Setzling wurde geknickt um die Flexibilität der Schicht zu bestimmen. Ebenfalls wurde daraufhin das Risiko für Rissbildung bewertet.

Tabelle 2: Beispiele 1-10

| Beispiel | Zusammensetzung | Farbe | Oberflächen-klebrigkeit | Flexibilität | Risiko für Rissbildung |
|---|---|---|---|---|---|
| 1 | Zusammensetzung 2 | keine | klebrig | flexibel | unwahrscheinlich |
| 2 | Zusammensetzung 2, jedoch **18% Dispercoll S4510** | keine | klebrig | flexibel | unwahrscheinlich |
| 3 | Zusammensetzung 2, jedoch **25 % Dispercoll S4510** | leicht weißlich | klebrig | flexibel | unwahrscheinlich |
| 4 | Zusammensetzung 2, jedoch **30 % Dispercoll S4510** | leicht weißlich | leicht klebrig | flexibel | wahrscheinlich |
| 5 | Zusammensetzung 2, jedoch **40% Dispercoll S4510** | weißlich | leicht klebrig | leicht flexibel | hoch |
| 6 | Zusammensetzung 2, jedoch **50 % Dispercoll S4510** | weiß | leicht klebrig | leicht flexibel | hoch |
| 7 | Zusammensetzung 2 und zusätzlich **25% Kreide** | weißlich | leicht klebrig | nicht flexibel | hoch |

(fortgesetzt)

| Beispiel | Zusammensetzung | Farbe | Oberflächen-klebrigkeit | Flexibilität | Risiko für Rissbildung |
|---|---|---|---|---|---|
| 8 | Zusammensetzung 2 und zusätzlich **50% Kreide** | weiß | nicht klebrig | nicht flexibel | sehr hoch |
| 9 | Zusammensetzung 2 und zusätzlich **5% Titandioxid** | weiß | klebrig | flexibel | unwahrscheinlich |
| 10 | Zusammensetzung 2 und zusätzlich **10% Titandioxid** | strahlendes weiß | klebrig | flexibel | unwahrscheinlich |

Die Beispiele 1 bis 6 zeigen, dass eine ausreichende Weißfärbung nur mit sehr hohen Dispercoll S4510 Anteilen erreicht werden kann, dadurch jedoch das Risiko für eine Rissbildung erhöht wird. Durch die Zugabe eines Pigments mit einem Brechungsindex von größer 1,5 (Beispiele 7, 9 und 10) in Anteilen bis 30 Gew.-% können sowohl eine ausreichende Weißfärbung als auch ein geringes Risiko für Rissbildung erhalten werden. Die Zugabe von mehr als 30 Gew.-% eines Pigments führt zu einer hohen Wahrscheinlichkeit für die Rissbildung (Beispiel 8). Wie aus Beispielen 9 und 10 ersichtlich ist, ist insbesondere die Verwendung von Titandioxid vorteilhaft, da diese Zusammensetzungen zudem eine exzellente Flexibilität aufweisen.

UV-Stabilität

Nach dem Behandeln der Setzlinge bzw. Bäume werden diese dem Sonnenlicht ausgesetzt sein. Um zu ermitteln, ob der UV-Anteil des Sonnenlichts einen starke Einwirkung auf die Schicht hat, wurde ein UV-Licht-Test entwickelt. Für diesen Test wurden Keramikfliesen (15x15 cm) mit den jeweiligen wässrigen Zusammensetzungen entweder durch Sprühen (s) oder Gießen (g), die zwei Verfahren welche in der Praxis überwiegend benutzt werden, beschichtet. Die behandelten Keramikfliesen wurden 7 Tage lang bei Raumtemperatur inkubiert und kontinuierlich einem UV-Licht (UVA = 4,2 W/cm$^2$ und UVB=0,3mW/cm$^2$) ausgesetzt. Danach wurde die Farbänderung und Fexibilität bestimmt. Die Flexibilität wurde durch Abreiben der Beschichtungen von den Keramikfliesen visuell ermittelt.

Tabelle 3: Beispiele 11 bis 18

| Beispiel | Zusammensetz ung und Auftragsart | C74 [%] | C2325 [%] | C2372 [%] | Verdicker [%] | S4510 [%] | $TiO_2$ [%] | Farbe nach UV-Behandlu ng | Flexibili tät |
|---|---|---|---|---|---|---|---|---|---|
| 11 | Zusammensetzung 4 *(s)* | 0,00 | 0,00 | 75,75 | 0,07 | 19,53 | 4,65 | gelb | gut |
| 12 | Zusammensetzung 1 *(s)* | 79,45 | 0,00 | 0,00 | 0,07 | 20,48 | 0,00 | gelbbräunlich | hoch |
| 13 | Zusammensetzung 2 *(s)* | 0,00 | 79,45 | 0,00 | 0,07 | 20,48 | 0,00 | gelbbräunlich | niedrig |
| 14 | Zusammensetzung 3 *(s)* | 55,44 | 0,00 | 18,48 | 5,13 | 16,31 | 4,65 | gelb | gut |
| 15 | Zusammensetzung 4 *(g)* | 0,00 | 0,00 | 75,75 | 0,07 | 19,53 | 4,65 | gelbbräunlich | gut |
| 16 | Zusammensetzung 1 *(g)* | 79,45 | 0,00 | 0,00 | 0,07 | 20,48 | 0,00 | gelbbräunlich | gut |
| 17 | Zusammensetzung 2 *(g)* | 0,00 | 79,45 | 0,00 | 0,07 | 20,48 | 0,00 | gelbbräunlich | niedrig |
| 18 | Zusammensetzung 3 *(g)* | 55,44 | 0,00 | 18,48 | 5,13 | 16,31 | 4,65 | gelb | hoch |

Die Beispiele zeigen, dass Zusammensetzungen, welche zusätzlich $TiO_2$ enthalten geringere Verfärbung aufwiesen, und somit UV-stabiler sind, als die Vergleichsbeispiele ohne Pigment.

Wirksamkeit in Käfigen mit drei Baumspezies

Die Wirksamkeit von aufgetragenen Schichten auf Setzlinge wurde in Käfigen getestet. Dabei wurde die Zusammensetzung 3, ein Acrylat-basierter Klebstoff (Bayhydrol A2427) sowie zwei Konkurrenzprodukte, Hylonox 13 und KVAEE Wachs auf die Setzlinge aufgetragen. Drei, häufig in der Forstwirtschaft in Europa vorkommenden, Koniferen *Pseudotsuga menziesii, Picea abies* und *Pinus sylvestris* wurden getestet. Alle Spezies sind anfällig für *Hylobius abietis.* Dementsprechend wurde die Schicht auf diesen Spezies getestet. In dem Bioassay wurde nur der Schaden des beschädigten Bereichs in % relativ zu der unbehandelten Kontrolle bewertet. Die Zusammensetzung 3, Bayhydrol A2427 und Hylonox 13 wurden so auf die Setzlinge aufgetragen, dass eine etwa 0,5 mm dicke Schicht vorlag. Das KVAEE Wachs konnte nur mit einer Schichtdicke von 1 mm, aufgrund seiner hohen Viskosität während der Auftragung, aufgetragen werde. Alle nicht behandelten Flächen wurden schwer durch *Hylobius* beschädigt, was eine hohen Schädlingsdruck anzeigt. Pro Pflanze wurde ein *Hylobius abietis* in den Käfig gebracht. Die Wirksamkeit wurde bei *Pseudotsuga menziesii* nach 17 Tagen, bei *Picea abies* nach 18 Tagen und bei *Pinus sylvestris* nach 18 Tagen ermittelt. Die Wirksamkeit wurde visuell Bestimmt und in fünf Gruppen unterteilt, sehr hohe Wirksamkeit, hohe Wirksamkeit, mäßige Wirksamkeit, schlechte Wirksamkeit und keine Wirksamkeit (Tabelle 5).

Tabelle 4: Bioassay

| | Keine Behandlung | Zusammensetzung 3 | Bayhydrol A2427 | Hylonox 13 | KVAEE Wachs |
|---|---|---|---|---|---|
| *Pseudotsuga menziesii* | Schwer beschädigt | Sehr hohe Wirksamkeit | Mäßige Wirksamkeit | Hohe Wirksamkeit | Sehr hohe Wirksamkeit |
| *Picea abies* | Schwer beschädigt | Sehr hohe Wirksamkeit | Mäßige Wirksamkeit | Hohe Wirksamkeit | Sehr hohe Wirksamkeit |
| *Pinus sylvestris* | Schwer beschädigt | Hohe Wirksamkeit | Keine Wirksamkeit | Schlechte Wirksamkeit | Sehr hohe Wirksamkeit |

Der Bioassay zeigt, dass die Zusammensetzung gemäß der vorliegenden Erfindung wirksamer oder ähnlich wirksam im Vergleich zu bereits bekannten Produkten ist. Insbesondere ist die Wirksamkeit im Vergleich zum KVAEE Wachs ähnlich, ohne dessen Nachteile bei der Handhabung aufzuweisen.

**Patentansprüche**

1. Wässrige Zusammensetzung zum Schutz von Setzlingen oder Bäumen umfassend oder bestehend aus:

    a) eine Polychloropren-Dispersion, bevorzugt mit einer mittleren Teilchengröße von 60 bis 220 nm;
    b) eine wässrige Siliciumdioxid-Dispersion mit einem mittleren Partikeldurchmesser der Siliciumdioxidpartikel von 1 bis 400 nm;
    c) gegebenenfalls 0,1 bis 30 Gew.-%, bezogen auf das Gesamtgewicht der nichtflüchtigen Anteile der wässrigen Zusammensetzung, mindestens eines Pigments mit einem Brechungsindex von größer 1,5;
    d) mindestens ein Verdicker; und
    e) gegebenenfalls weitere Additive.

2. Wässrige Zusammensetzung gemäß Anspruch 1, **dadurch gekennzeichnet, dass** der mindestens eine Verdicker d) ausgewählt ist aus Polyacrylsäuren, wasserlöslichen Polyurethanen, Kieselsäuren, Cellulosederivaten wie polycarboxylierte Celluloseether, nichtionische Celluloseether und mikrofibrillierte Cellulose, Alginate, Xanthane, Polyvinylalkohole und Mischungen davon.

3. Wässrige Zusammensetzung gemäß einem der vorstehenden Ansprüche, **dadurch gekennzeichnet, dass** die $SiO_2$-Partikel über Hydroxylgruppen an der Partikel-Oberfläche verfügen.

4. Wässrige Zusammensetzung gemäß einem der vorstehenden Ansprüche, **dadurch gekennzeichnet, dass** die wässrige Siliciumdioxid-Dispersion b) eine wässrige Kieselsäuresole ist.

5. Wässrige Zusammensetzung gemäß einem der vorstehenden Ansprüche, **dadurch gekennzeichnet, dass** die Polychloropenpolymere in der Polychloropren-Dispersion einen Anteil von 0,1 bis 10 Gew.-% an 2,3-Dichlorbutadien-Comonomeren enthält, bezogen auf das Gesamtgewicht der nichtflüchtigen Anteile der Polychloroprenpolymere.

6. Wässrige Zusammensetzung gemäß einem der vorstehenden Ansprüche, **dadurch gekennzeichnet, dass** die Menge an d) 0,01 bis 10 Gew.-% bezogen auf das Gesamtgewicht der nichtflüchtigen Anteile der wässrigen Zusammensetzung.

7. Wässrige Zusammensetzung gemäß einem der vorstehenden Ansprüche, **dadurch gekennzeichnet, dass**

20 bis 99 Gew.-%, bevorzugt 40 bis 90 Gew.-% an a);
0,85 bis 40 Gew.-%, bevorzugt 2,5 bis 20 Gew.-%, stärker bevorzugt 5 bis 9,5 Gew.-% an b);
0 bis 30 Gew.-%, bevorzugt 0,1 bis 25 Gew.-% stärker bevorzugt 3 bis 10 Gew.-% an c);
0,01 bis 10 Gew.-%, bevorzugt 0,3 bis 8 Gew.-% an d); und
0 bis 5 Gew.-%, bevorzugt 0,01 bis 2 Gew.-% an e) enthalten sind, jeweils bezogen auf das Gesamtgewicht der nichtflüchtigen Anteile der wässerigen Zusammensetzung.

8. Wässrige Zusammensetzung gemäß einem der vorstehenden Ansprüche, **dadurch gekennzeichnet, dass** sie eine Viskosität von 500 bis 7.000 mPa*s bestimmt nach DIN ISO 2555 mittels eines Brookfield Rotationsviskosimeters mit Spindel #2 bis zu einer Viskosität von 2.500 mPa*s und darüber mit einer Spindel #3, bei 12 upm und 23°C aufweist.

9. Verfahren zur Herstellung der wässrigen Zusammensetzung gemäß einem der Ansprüche 1 bis 8, umfassend die Schritte:

i) Dispergieren der Komponenten c) und d) und gegebenenfalls e) in der wässrigen Silicium-Dispersion b); und
ii) Zugeben der Polychloropren-Dispersion a) unter Rühren.

10. Setzling oder Baum, auf dessen Außenfläche teilweise oder vollflächig eine Schicht gebunden ist, die durch Auftragen der wässrigen Zusammensetzung gemäß einem der Ansprüche 1 bis 8 erhalten wurde.

11. Setzling oder Baum gemäß Anspruch 10, **dadurch gekennzeichnet, dass** die Schicht eine Schichtdicke von 0,1 bis 3 mm aufweist.

12. Setzling oder Baum gemäß Anspruch 10 oder 11, wobei die Schicht eine Shore A Härte, bestimmt nach DIN ISO 7619-1:2010 von weniger als 50 aufweist.

13. Verfahren zum Auftragen einer Schicht auf einen Setzling oder Baum, **dadurch gekennzeichnet, dass** in einem ersten Schritt die wässrige Zusammensetzung gemäß einem der Ansprüche 1 bis 8 auf die Außenfläche des Setzlings oder des Baums teilweise oder vollflächig aufgetragen wird; und danach in einem zweiten Schritt Trocknen der Zusammensetzung bei einer Temperatur von -5°C bis 80 °C.

14. Verfahren zum Auftragen einer Schicht auf einen Setzling oder Baum, **dadurch gekennzeichnet, dass** in einem ersten Schritt die Komponenten a), c), d) und gegebenenfalls e) der wässrige Zusammensetzung gemäß einem der Ansprüche 1 bis 8 auf die Außenfläche des Setzlings oder des Baums teilweise oder vollflächig aufgetragen werden; und danach in einem zweiten Schritt die Komponente b) der wässrigen Zusammensetzung gemäß einem der Ansprüche 1 bis 8, welche zusätzlich ein Koagulationshilfsmittel enthält, aufgetragen wird.

15. Verfahren gemäß Anspruch 13 oder 14, **dadurch gekennzeichnet, dass** das Auftragen mittels Sprühen erfolgt.

16. Verwendung der wässrigen Zusammensetzung gemäß einem der Ansprüche 1 bis 8 zum Schutz von Setzlingen oder Bäumen vor Wildverbiss oder Insekten.

Europäisches Patentamt
European Patent Office
Office européen des brevets

Nummer der Anmeldung

EP 17 17 2807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/003596 A1 (ALFA KLEBSTOFFE AG [CH]; SIMMLER-BORNHAUSER EMIL [CH]; SIMMLER-CADUFF) 12. Januar 2012 (2012-01-12) | 1,3-9 | INV. A01N25/04 A01G13/02 |
| Y | * Tabellen 2, 3 * ----- | 1-16 | |
| Y | WO 03/102066 A2 (BAYER AG [DE]; MUSCH RUEDIGER [DE]; PANSKUS KNUT [DE]; PANTKE DIETRICH) 11. Dezember 2003 (2003-12-11) * Seite 7, Zeile 10 - Zeile 15 * * Ansprüche 1, 5, 6 * ----- | 1-16 | |
| Y | US 2005/085584 A1 (MUSCH RUDIGER [DE] ET AL) 21. April 2005 (2005-04-21) * Absätze [0120], [0125], [0150] * * Zusammensetzungen 2-6 * * Anspruch 1 * ----- | 1-16 | |
| Y | WO 2008/037704 A1 (STARCK H C GMBH [DE]; PANTKE DIETRICH [DE]; MUSCH RUEDIGER [DE]) 3. April 2008 (2008-04-03) * Seite 11, Zeile 15 - Zeile 19 * * Abschnitte 1.4.1, 1.4.2 * * Anspruch 1 * ----- | 1-16 | RECHERCHIERTE SACHGEBIETE (IPC) A01N A01G |
| Y | DD 151 034 A1 (WIENHAUS OTTO; BLOSSFELD OTFRIED; MISSBACH KARL; WONKA RICHARD; KNORR) 30. September 1981 (1981-09-30) * Ansprüche 1-3 * ----- | 1-16 | |
| Y | DE 42 29 460 A1 (WACKER CHEMIE GMBH [DE]) 10. März 1994 (1994-03-10) * Ansprüche 1-7 * ----- | 1-16 | |
| Y | FR 2 871 996 A1 (CIE FRANCO CONTINENTALE DES LU [FR]) 30. Dezember 2005 (2005-12-30) * Ansprüche 1, 2 * ----- | 1-16 | |

-/--

Der vorliegende Recherchenbericht wurde für alle Patentansprüche erstellt

| Recherchenort | Abschlußdatum der Recherche | Prüfer |
|---|---|---|
| München | 31. Juli 2017 | Habermann, Jörg |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

EP 17 17 2807

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 903 081 A1 (GOELDNER PETER DIPL ING [AT]) 24. März 1999 (1999-03-24) * Ansprüche 1-6 * ----- | 1-16 | |
| Y | DE 36 41 680 A1 (NIEDERSAECHSISCHES MINISTERIUM [DE]) 16. Juni 1988 (1988-06-16) * Spalte 2, Zeile 53 - Zeile 67 * * Ansprüche 1-4 * ----- | 1-16 | |
| Y | WO 03/024216 A1 (ROBIGUS AB [SE]; NORDENHEM HENRIK [SE]; NORDLANDER GOERAN [SE]) 27. März 2003 (2003-03-27) * Beispiele 1, 2 * * Ansprüche 1-4 * ----- | 1-16 | |
| Y | WO 2004/098287 A1 (SIGGE & MARTIN AB PROF [SE]; SVENSSON SIGFRID [BE]) 18. November 2004 (2004-11-18) * Beispiel 5 * ----- | 1-16 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 31. Juli 2017 | Habermann, Jörg |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
....................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**    EP 17 17 2807

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2017

| Im Recherchenbericht angeführtes Patentdokument | Datum der Veröffentlichung | Mitglied(er) der Patentfamilie | Datum der Veröffentlichung |
|---|---|---|---|
| WO 2012003596 A1 | 12-01-2012 | AU 2011276933 A1 | 07-02-2013 |
| | | BR 112013000514 A2 | 17-05-2016 |
| | | CA 2804724 A1 | 12-01-2012 |
| | | CN 103221469 A | 24-07-2013 |
| | | DK 2591046 T3 | 27-06-2016 |
| | | EA 201390083 A1 | 30-05-2013 |
| | | EP 2591046 A1 | 15-05-2013 |
| | | JP 5859524 B2 | 10-02-2016 |
| | | JP 2013531105 A | 01-08-2013 |
| | | KR 20130096699 A | 30-08-2013 |
| | | PL 2591046 T3 | 30-09-2016 |
| | | US 2013123400 A1 | 16-05-2013 |
| | | WO 2012003596 A1 | 12-01-2012 |
| | | ZA 201300213 B | 25-06-2014 |
| WO 03102066 A2 | 11-12-2003 | AT 550379 T | 15-04-2012 |
| | | AU 2003237661 A1 | 19-12-2003 |
| | | BR 0311617 A | 08-03-2005 |
| | | CA 2488717 A1 | 11-12-2003 |
| | | CN 1675297 A | 28-09-2005 |
| | | DE 10224898 A1 | 18-12-2003 |
| | | EP 1513891 A2 | 16-03-2005 |
| | | ES 2382654 T3 | 12-06-2012 |
| | | HK 1083515 A1 | 21-12-2007 |
| | | JP 5405258 B2 | 05-02-2014 |
| | | JP 2005528495 A | 22-09-2005 |
| | | JP 2010043274 A | 25-02-2010 |
| | | KR 20050014001 A | 05-02-2005 |
| | | MX PA04012000 A | 07-03-2005 |
| | | PL 213557 B1 | 29-03-2013 |
| | | TW I317367 B | 21-11-2009 |
| | | US 2003221778 A1 | 04-12-2003 |
| | | WO 03102066 A2 | 11-12-2003 |
| US 2005085584 A1 | 21-04-2005 | AU 2004280360 A1 | 21-04-2005 |
| | | CA 2538955 A1 | 21-04-2005 |
| | | EP 1664225 A1 | 07-06-2006 |
| | | JP 2007533778 A | 22-11-2007 |
| | | KR 20060083211 A | 20-07-2006 |
| | | MX PA06002882 A | 05-06-2006 |
| | | US 2005085584 A1 | 21-04-2005 |
| | | WO 2005035683 A1 | 21-04-2005 |
| WO 2008037704 A1 | 03-04-2008 | AT 511528 T | 15-06-2011 |
| | | CN 101535392 A | 16-09-2009 |
| | | DE 102006045384 A1 | 03-04-2008 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 17 17 2807

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2017

| Im Recherchenbericht angeführtes Patentdokument | Datum der Veröffentlichung | Mitglied(er) der Patentfamilie | Datum der Veröffentlichung |
|---|---|---|---|
| | | EP 2066742 A1<br>ES 2367533 T3<br>US 2009258219 A1<br>US 2013245163 A1<br>WO 2008037704 A1 | 10-06-2009<br>04-11-2011<br>15-10-2009<br>19-09-2013<br>03-04-2008 |
| DD 151034 A1 | 30-09-1981 | KEINE | |
| DE 4229460 A1 | 10-03-1994 | KEINE | |
| FR 2871996 A1 | 30-12-2005 | KEINE | |
| EP 0903081 A1 | 24-03-1999 | AT 406929 B<br>EP 0903081 A1 | 25-10-2000<br>24-03-1999 |
| DE 3641680 A1 | 16-06-1988 | KEINE | |
| WO 03024216 A1 | 27-03-2003 | AT 318513 T<br>CA 2459876 A1<br>EP 1427282 A1<br>NO 20041603 A<br>PL 367068 A1<br>RU 2294639 C2<br>US 2004244287 A1<br>WO 03024216 A1 | 15-03-2006<br>27-03-2003<br>16-06-2004<br>09-06-2004<br>21-02-2005<br>10-03-2007<br>09-12-2004<br>27-03-2003 |
| WO 2004098287 A1 | 18-11-2004 | KEINE | |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004244287 A1
- WO 0224825 A
- DE 3002734 A
- US 5773544 A
- WO 2009027013 A
- DE 3002734
- EP 0120471 A2
- WO 2015180844 A1
- EP 2196579 A1
- WO 2011095335 A1

**In der Beschreibung aufgeführte Nicht-Patentliteratur**

- **G. N. SEARS.** *Analytical Chemistry,* Dezember 1981, vol. 28 (12), 1956
- **K. H. BÜCHEL ; H. -H. MORETTO ; P. WODITSCH.** Industrielle Anorganische Chemie. Wiley VCH Verlag, 1999
- Gmelins Handbuch der anorganischen Chemie. Verlag Chemie, 1924, vol. 32, 134, , 135
- GMELINS HANDBUCH DER ANORGANISCHEN CHEMIE. Verlag Chemie, 1956, vol. 32, 1001-1003
- Gmelins Handbuch der anorganischen Chemie. Verlag Chemie, 1939, vol. 27, 12, , 13, , 47-50, 62-64
- **W. HEILEN et al.** Additive für wässrige Lacksysteme. Vincentz-Verlag, 61 ff
- **R. JORDAN ; R. HINTERWALDNER.** Klebharze. Hinterwaldner Verlag, 1994, 75-115